# EUROPEAN PATENT APPLICATION

(11) **EP 1 725 036 A1**
(43) Date of publication of application: **22.11.2006**
(21) Application number: 05300395.0
(22) Date of filing: 20.05.2005
(51) Int. Cl.: H04N 7/24

(54) **A method and a video server for embedding audiovisual packets in an IP packet**

(71) Applicant: Thomson Licensing, 92100 Boulogne-Billancourt (FR)
(72) Inventor: Champel, Mary-Luc, 35220 Marpiré (FR); Fleury, Jean-Francois, 35000 Rennes (FR)
(74) Representative: Ruellan-Lemonnier, Brigitte

(57) **Abstract**

A method and a video server (210) for embedding audiovisual packets (400) in an IP packet (406) to improve Quality of Service for Video over IP. A processor (211) verifies (310) the type of the audiovisual packet, associates (320) a priority to the audiovisual packet according to its type, and embeds (330) the audiovisual packet in the IP packet if the IP packet is empty or if the audiovisual packet has the same priority as the at least one audiovisual packet already in the IP packet. The processor may also close (340) the IP packet and set (340) a priority (125) to the IP packet according to the priority of the audiovisual packets therein. The method is particularly useful for embedding MPEG-2 TS packets. Advantageous embodiments deal with particular priorities for different types of packets, such as giving the highest priority to either video or audio packets, but not both.

## Description

### FIELD OF THE INVENTION

The present invention relates generally to video over IP, and in particular to Quality of Service (QoS) for Moving Picture Experts Group 2 (MPEG-2) Transport Streams in Internet Protocol (IP) networks.

### BACKGROUND OF THE INVENTION

Internet Protocol (IP) networks have been a common occurrence for a long time and are often available the whole way from content provider to content consumer, such as in contribution networks, distribution networks, access networks, and home networks. There is a long-felt desire to stream video over the IP networks, and as these networks become even more widespread and capable of delivering increasing amounts of data, it is expected that streaming video over IP will become an everyday phenomenon.

Unfortunately, prior art techniques for broadcasting video in other kinds of networks cannot be easily adapted to IP networks. One reason is that IP networks are far more difficult to manage than broadcast networks. Another, perhaps more important reason is that since IP networks rarely are dedicated only to video streaming, but also to other services such as web browsing and e-mail exchange, the latter may be in conflict with the video streaming service. As streamed video is sensitive to, among other things, packet loss and delays in the network, conflicts with other kinds of traffic may lead to seriously decreased quality of the streamed video when displayed for a user.

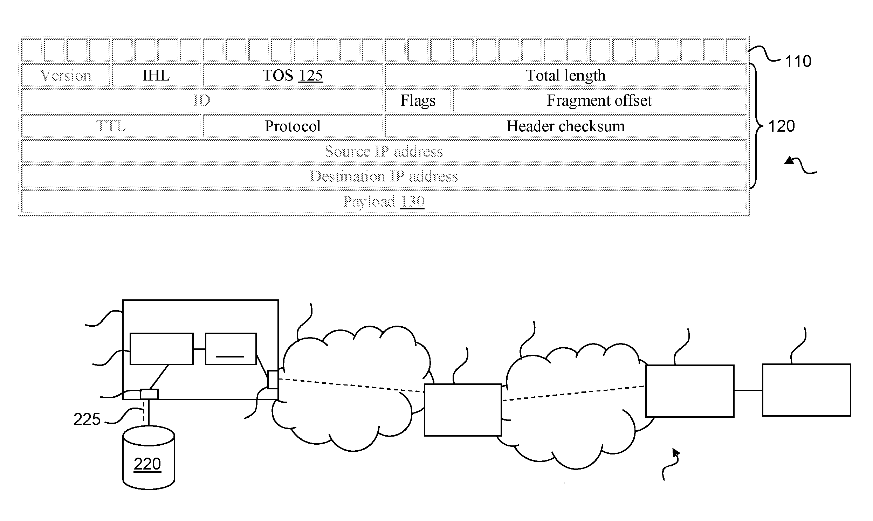

The data packets sent in IP networks are IP packets, an example of which is illustrated in Figure 1. As is well known in the art, the IP packet 100 comprises a header 120, and a payload 130. The header comprises a Type of Service (TOS) field 125, further described hereinafter. The top line 110 is not part of the IP packet 100 itself, it just indicates the number of bits. It should be noted that the length of the payload is variable and that it is not limited to 32 bits as illustrated in Figure 1.

An IP packet generally carries no more than 1460 bytes of payload to ensure that it is not fragmented as it passes through physical networks. As a MPEG-2 transport stream (TS) packet used to transport video is 188 bytes long, one IP packet may embed between one and seven MPEG-2 TS packets. In order to minimise overhead, prior art solutions embed seven TS packets per IP packet. The TS packets are embedded in the order they arrive - first in, first out - and there is no differentiation between IP packets regarding the payload of the MPEG-2 TS packets they embed. In other words, the IP packets of video over IP look the same regardless of their content.

In a typical QoS architecture, the video streaming service is given a dedicated priority and perhaps a dedicated reserved bandwidth. This allows the video streaming service to perform reasonably well even when some network errors appear. However, as the number of network errors increases, there is a time when one or more IP packets belonging to the video streaming service will be dropped. This results in the loss of seven MPEG-2 TS packets per dropped IP packet, which definitely creates a serious degradation of the video quality for the user.

Indeed, when the video decoder misses seven MPEG-2 TS packets, it is very likely that the picture freezes until the decoder receives a new frame or, possibly, a new key frame. During this time, which can last one second, the user is shown a corrupted picture, often with so-called macro-blocks. This behaviour, due to the best-effort nature of IP networks, is clearly undesirable.

It can therefore be appreciated that there is a need for a solution that improves the Quality of Service for Video over IP. The present invention provides such a solution.

### SUMMARY OF THE INVENTION

In a first aspect, the invention is directed to a method of embedding at least one audiovisual packet in an IP packet. The type of the audiovisual packet is verified, the audiovisual packet is associated with a priority according to its type, and the audiovisual packet is embedded in the IP packet if the IP packet is empty or if the audiovisual packet has the same priority as the at least one audiovisual packet already in the IP packet.

In a preferred embodiment, the IP packet is closed and a priority is set to it according to the at least one audiovisual packet therein.

In another preferred embodiment, there is predetermined maximum number of audiovisual packets that may be embedded in the IP packet, to avoid fragmentation of the IP packet as it passes through an IP network.

In a further preferred embodiment, the priority of audiovisual packets related to audio and the priority of audiovisual packets related to video is higher the priority of audiovisual packets related to signalling.

In yet another preferred embodiment, audiovisual packets related to audio and audiovisual packets related to video have different priorities.

In another preferred embodiment, the audiovisual packets are MPEG-2 Transport Stream (TS) packets.

It is advantageous that TS packets related to audio and TS packets related to Intra-coded (I) frames have higher priority than TS packets related to Predictive-coded (P) frames and TS packets related to Bi-directional predictive-coded (B) frames.

It is also advantageous that a TS packet relating to video is embedded in the IP packet only if it relates to the same frame as the at least one TS packet relating to video already in the IP packet.

It is also advantageous that TS packets related to Program Association Tables (PAT) and TS packets related to Program Map Tables (PMT) have a higher priority than TS packets relating to other Program Specific Information (PSI) tables at least part of the time.

In another preferred embodiment, audiovisual packets relating to error correction have a lower priority than other audiovisual packets.

It is advantageous that there are at least two different types of error correction schemes, each related to a different type of audiovisual packets.

In a second aspect, the invention is directed to a video server for embedding at least one audiovisual packet in an IP packet. The video server comprises a processor adapted to verify the type of the audiovisual packet, associate a priority to the audiovisual packet according to its type, and embed the audiovisual packet in the IP packet if the IP packet is empty or if the audiovisual packet has the same priority as the at least one audiovisual packet already in the IP packet.

In a preferred embodiment, the processor is further adapted to close the IP packet, and set a priority to the IP packet according to the priority of the audiovisual packets therein.

In a further preferred embodiment, the processor is further adapted to embed at most a predetermined maximum number of audiovisual packets in the IP packet, so as to avoid fragmentation of the IP packet as it passes through an IP network.

In yet another preferred embodiment, the processor is further adapted to associate a higher priority to audiovisual packets related to audio and to audiovisual packets related to video higher than to audiovisual packets related to signalling.

It is advantageous that the processor further is adapted to associate different priorities to audiovisual packets related to audio and to audiovisual packets related to video.

In another preferred embodiment, the audiovisual packets are MPEG-2 Transport Stream (TS) packets.

It is advantageous that the processor further is adapted to associate a higher priority to TS packets related to audio and TS packets related to Intra-coded (I) frames than to TS packets related to Predictive-coded (P) frames and TS packets related to Bi-directional predictive-coded (B) frames.

It is also advantageous that the processor further is adapted to embed a TS packet relating to video only if it relates to the same frame as the at least one TS packet relating to video already in the IP packet.

It is further advantageous that the processor further is adapted to at least part of the time associate a higher priority to TS packets related to Program Association Tables (PAT) and TS packets related to Program Map Tables (PMT) than to TS packets relating to other Program Specific Information (PSI) tables.

In another preferred embodiment, the processor is further adapted to associate a lower priority to audiovisual packets relating to error correction than to other audiovisual packets.

In another preferred embodiment, the video server further comprises a reception unit adapted to receive audiovisual packets and to forward them to the processor.

In another preferred embodiment, the video server further comprises an output unit adapted to receive IP packets and to send them onto an IP network.

In another preferred embodiment, the video server further comprises a memory adapted to store audiovisual packets and IP packets while they are embedded.

### BRIEF DESCRIPTION OF THE DRAWINGS

Preferred features of the present invention will now be described, by way of example, with reference to the accompanying drawings, in which:
Figure 1, already described, illustrates a prior art IP packet;
Figure 2 illustrates an exemplary network in which the invention is used;
Figure 3 illustrates a flowchart of the method according to the invention; and
Figure 4 illustrates embedding of audiovisual packets in IP packets according to the invention.

### DETAILED DESCRIPTION OF PREFERRED EMBODIMENTS

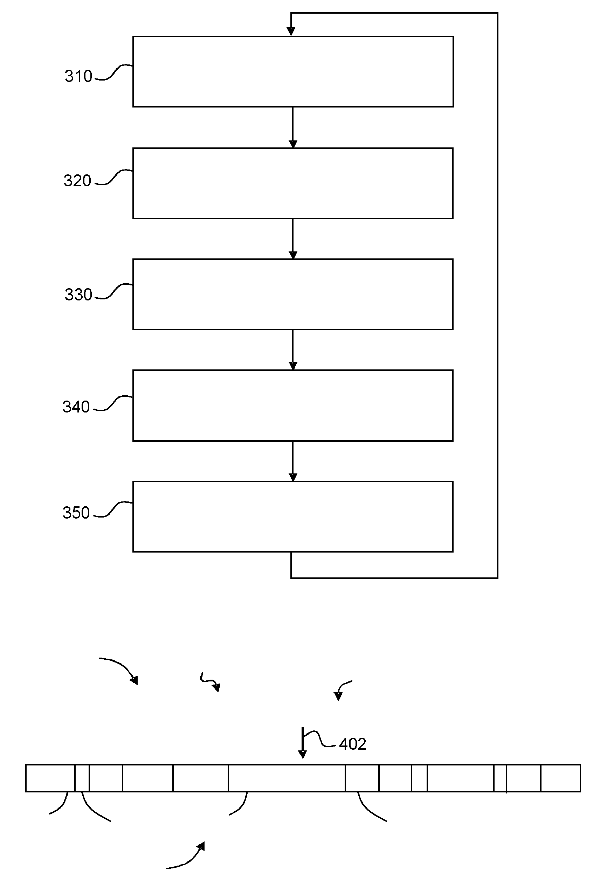

Figure 2 illustrates an exemplary network 200 in which the invention is used. The network comprises a video streaming server 210 for reading MPEG-2 TS packets (also called audiovisual packets) 225 from a storage medium 220 and sends them embedded in IP packets onto a first network 230. On its way to its destination, an IP packet may arrive at router 240 to be directed onto a second network 250, from where it arrives at a decoder 260 that processes the IP packet and delivers the embedded TS packets for display of the video on a display 260.

As mentioned hereinbefore, a typical prior art MPEG-2 TS video streaming server creates MPEG-2 TS packets and embeds seven of these packets into Internet Protocol (IP) packets and sends them through the network. Should the server encapsulate the MPEG2-TS packets inside User Datagram Protocol (UDP) packets or Real Time Protocol (RTP) packets, as is well known in the art, the principle remains the same. If the priority of the video streaming service is different from that of other services present in the delivery network, the streaming server will also set a given priority in the Type of Service (TOS) field of the IP packets that embed the audiovisual packets. It will be appreciated that the IP packets with their seven MPEG-2 TS packets will all be set with the same priority.

According to the invention, however, the server 210 performs the following actions:
- Classifying MPEG-2 TS packets based on the payload type.
- Associating a priority to each classification. It is advantageous that each priority is different from the other priorities. A high priority is given to packets that are essential to the video service, while lower priority is given to packets that are unessential to the video service. A packet is considered as essential if the degradation of the service is obviously noticeable for the user when the packet is lost. The skilled person will appreciate that packets that cause the greatest degradation are allowed the highest priority and so on.
- Embedding MPEG-2 TS packets that share the same classification (and therefore the same priority) into IP packet. If the limit of 1460 bytes applies, an IP packet will contain between one and seven MPEG-2 TS packets, not always exactly seven MPEG-2 TS packets as in the prior art.
- Marking the TOS field of the IP packets with a priority that depends on the payload of the IP packets. The priority equals that in the association step hereinbefore.

With the invention, if network problems occur and force IP packets to be dropped, less essential MPEG-2 TS packets are dropped first and the user may not notice any degradation of the video service. Indeed, with the invention, if the user still notices a degradation of the service, this implies that some essential packets were dropped. It follows that at least some unessential packets were dropped and a network in which this happens is usually not suitable for video streaming.

The classification and assignment of priority will now be explained in greater detail with reference to Figure 2, Figure 3 and Figure 4. As already mentioned and as is well known in the art, a MPEG-2 TS Video service comprises many MPEG-2 TS packets, each of which is 188 bytes long. These packets may comprise video data, audio data, and signalling such as PSI tables or private sections, which for instance may deliver Service Information tables or interactive content to the user. Every MPEG2-TS packet has a 4-byte header that comprises a 13-bit Packet Identifier (PID), which identifies the payload of the MPEG-2 TS packets.

### 1-2. Classifying and prioritising MPEG-2 TS packets

The server 210 receives a new TS packet 400 through the reception unit 213 that forwards the packet 400 to the processor (CPU) 211. The processor reads the PID of the packet to classify it, i.e. to identify the kind of payload therein (step 310). The mechanism, study of the PAT and the PMT tables, used to identify the association of the PIDs is well known in the art and will not be described in detail herein. Once the processor 211 knows what kind of payload the packet contains, it can prioritise the packet (step 320) getting the information from a memory 212. In the following description, for illustration purposes only, we will at first use just three classes of packets. A person skilled in the art will appreciate that it for example is possible to define more classes to provide a better granularity of packets. These three exemplary classes are:
- Class H = High Priority,
- Class N = Normal Priority, and
- Class L = Low Priority.

Class H packets are packets that, if lost, would result in a serious degradation of the service, for example:
- Audio packets, and
- Video packets

Class N packets are quite important for the service but can be dropped from time to time without serious degradation of the service. Examples of such packets are packets with signalling, such as Program Specific Information (PSI) tables.

Class L packets are less important for the service and can be dropped from time to time without degrading the basic video service. The loss of such packets could prevent the user from using some improvements of the video service, but he would be unable to discern a decreased quality of the image or the sound. Examples of such packets are private section packets.

Usually, private section packets convey interactive content or Service Information tables. If these packets are lost, the user will not be able to use interactive services or access to information about the video service, but the user will still be able to watch the video service without quality degradation.

### 3-4. Embedding of MPEG-2 TS packets and TOS marking

When packets have been classified and a priority has been assigned to them, the processor 211 uses the classification during the streaming process. As already mentioned, prior art video servers usually send MPEG-2 TS packets by grouping them by 7 into an IP packet. According to the present invention, however, MPEG-2 TS packets with different priority classes are not sent in the same IP packet; instead, every TS packet in a transmitted IP packet has the same priority class.

Thus, rather than automatically embedding seven MPEG-2 TS in an IP packet, the processor 211 embeds (step 330) MPEG-2 TS packets 400 into an IP packet 406 in the memory 212 until the next TS packet has a priority class that is different than that of the TS packets already in the IP packet, or until the IP packet comprises a predetermined maximum number of TS packets (preferable seven TS packets for reasons given hereinbefore). When the priority class changes, or when the IP packet comprises the predetermined maximum number of TS packets, the processor 211 closes the current IP packet 400, sets the TOS field 125 according to the priority class of the TS packets therein (step 340), sends the IP packet 400 onto the network (350) through the output unit 214, creates a new IP packet and goes through another iteration of steps 310-350.

This step will now be illustrated by example with the aid of Figure 4. Assume that the video server is to process the video stream 225 comprising MPEG-2 TS packets 400 (only the priority class is indicated for the packets). For easy reference, the TS packets 400 are the following:
HHHLNNHHHLLLLHHHHHHHHHNNLHHHHLNNHH

During the embedding 402 of the TS packets 400, the video server outputs a number of IP packets 406 that embed the TS packets. The first (i.e. the leftmost) TS packet is a class H packet and so are the next two packets, so these packets are embedded in the same IP packet 406a. However, since the fourth TS packet is a class L packet, different from the previous class H packets, the video server closes the first IP packet 406a, sets the TOS field 125 to a value corresponding to class H and sends the IP packet onto the network. Then, the video server creates a new IP packet 406b and puts the class L TS packet therein and continues processing the packets in this manner. The video server thus outputs the following IP packets: [H H H] [L] [N N] [H H H] [L L L L].

When the video server processes the TS packet indicated by reference number 400i, this packet is the seventh class H packet in a row. This means that the IP packet 406i is full, so the video server closes the packet, sets the TOS field, and sends the IP packet 406i. The following class H TS packets are put into the next IP packet 406j. The video server thus continues with: [H H H H H H H] [H H] [N N] [L] [H H H H] [L] [N N] [H H]

Table 1 below illustrates possible TOS field values as used by Diffserv (Differentiated Services):

**Table 1: Diffserv TOS values**

| **DROP Precedence** | **Class #1** | **Class #2** | **Class #3** | **Class #4** |
|---|---|---|---|---|
| Low Drop Prec | **(AF11)** | **(AF21)** | **(AF31)** | **(AF41)** |
| | **001010** | **010010** | **011010** | **100010** |
| Medium Drop Prec | **(AF12)** | **(AF22)** | **(AF32)** | **(AF42)** |
| | **001100** | **010100** | **011100** | **100100** |
| High Drop Prec | **(AF13)** | **(AF23)** | **(AF33)** | **(AF43)** |
| | **001110** | **010110** | **011110** | **100110** |

If P_{AFxx} denotes the probability for a packet of class AFxx to be dropped, then the order between the classes is the following:
P_{AF11} < P_{AF21} < P_{AF31} < P_{AF41} < P_{AF12} < P_{AF22} < P_{AF32} < P_{AF42} < P_{AF13} < P_{AF23} < P_{AF33} < P_{AF43}

The TOS field comprises eight bits, of which only the first six are usable by a client, while the last two bits are reserved only for use between routers, mainly for early congestion notifications. Using the classification described hereinbefore (H,N and L classes) the corresponding classes can be mapped to the class #1 range of values for the TOS field:
- Class H : 001010
- Class N : 001100
- Class L : 001110

This ensures that network routers 240 drop class L packets before dropping any other packets, and drop class N packets only if dropping class L packets is not sufficient. Finally, class H packets are dropped only if there are no more class L and class N packets to drop and that still is not enough.

In a real case of video streaming, it may happen that the use of three classes as described hereinbefore - class L, class N, and class H - is not sufficient. This is because a video stream often comprises a vast majority of audio and video packets; all of them classified as class H packets. In extreme cases, close to 100 percent of the TS packets are considered high priority packets, in which case the priority information does not help much when deciding what packets to drop - apart from the few L and N packets, the H packets are dropped more or less at random since there is no way to differentiate between them. It is thus advantageous to define further priority classes to differentiate between these packets.

Since audio packets are all constructed the same way, there is no obvious distinction that can be made between them. This is however not true for video packets. Indeed, the MPEG-2 compression introduces three types of pictures that use different coding schemes:
- An Intra-coded (I) frame (also known as picture) is coded using information only from the frame itself.
- A Predictive-coded (P) frame is coded using motion-compensated prediction from the previous frame.
- A Bi-directional predictive-coded (B) frame is coded using motion compensated prediction from both the previous and the next frame.

It will be appreciated that the I (Intra-coded) frames are the most important, as they are references for the other frames: the P frames and the B frames. It is thus advantageous to classify MPEG-2 TS video packets into two classes: video packets that refer to an I frame and others. It should be noted that since a TS packet is 188 bytes long, an I frame, and often B and P frames as well, are divided into a plurality of TS packets.

The server may thus use the following classification and priority assignment:
- Class VH with very high priority: audio packets and video packets with I frames.
- Class H with high priority: video packets not related to I frames. (It should be noted that while the preferred embodiment uses the same priority for B and P frames, two alternative embodiments set different priorities to them; one with B higher than P, the other with P higher than B.)
- Class N with normal priority: PSI tables packets
- Class L with low priorities: any other packets such as private sections.

With this prioritisation scheme, even if a network router drops class H packets, the video decoder is still able to freeze the video until it receives another complete frame (as an example, with a Group of Pictures depth of 12 - a common choice - I frames arrive about every 0.5 seconds) without experiencing any macro-blocks in the image.

The mechanism for detection MPEG-2 TS packets that relate to an I frame is well known in the digital television domain and will therefore not be described.

In the classification described hereinbefore, all PSI tables are set to the normal priority class. However, as is well known in the art, a decoder needs to receive at least a Program Association Table (PAT) and a Program Map Table (PMT) table in order to start decoding a service. In order to increase the probability of these tables reaching the decoder, the invention proposes two solutions. The first solution is to set to a priority to PAT and PMT tables that is higher than that of other PSI tables. The second solution is to switch back and forth between different priorities for the PAT and PMT tables: to sometimes use the priority of the other PSI tables and to sometimes use a higher priority. For both solutions, the higher priority may be shared with other TS packets, e.g. class H, but the PAT and PMT tables may also be assigned a priority of their own.

Furthermore, a video over IP stream often comprises additional packets used to overcome the loss of IP packets. These packets comprise what is known as Forward Error Correction (FEC) codes. Depending on the FEC scheme, packets containing FEC data may contribute more to ensuring global network protection than IP packets carrying data. In such a case, it is preferable that FEC packets have a higher priority than the data carrying IP packets. More often, however, FEC packets are only useful when reconstructing lost IP packets, and in this case, it makes sense to prioritise IP packets over the FEC packets that allow reconstruction of the former (rather than using the same priority for both kinds of packets). It is thus usually advantageous to assign the lowest priority class to FEC packets, when these are present.

According to the prioritisation and embedding scheme proposed hereinbefore, an IP packet may comprise different kinds of MPEG-2 TS audiovisual packets if they have the same priority. For example, both video and audio packets may be assigned high priority (or, according to an embodiment) very high priority. It may thus be advantageous to use different TOS fields for video and audio, preferably by using the same drop precedence but a different class (see Table 1 hereinbefore). This way, IP packets will comprise either video or audio packets but not a mix of them, and one kind of packets will be dropped in preference to the other. This ensures that if a packet is dropped, the degradation will only occur on the video or on the audio, but not simultaneously on both audio and video.

In addition, it is preferred to group video MPEG-2 TS packets that relate to the same frame. Whenever the video server detects that a video packet relates to another frame, it closes the IP packet and puts the current video packet into a new IP packet. An advantage of this mechanism is that if one IP packet comprising video packets is lost, the decoder will only miss one frame and will be able to perform a single video frame drop. This would result in a very slight degradation of the video service that few people would notice.

In the prior art, FEC packets are computed for all the packets in the video stream because all IP packets usually have the same priority and therefore the same probability of being dropped/lost. According to the present invention, the less important an IP packet is, the more likely it is to be dropped. It is thus advantageous that a FEC scheme considers this. According to one embodiment, FEC packets are computed over IP packets with the highest priority only. According to another embodiment, different FEC schemes are applied to different classes of IP packets. In this case, a better scheme - resulting in more FEC data - is used for the more important IP packets.

It can thus be appreciated that the present invention improves the Quality of Service for Video over IP.

It will be understood that the present invention has been described purely by way of example, and modifications of detail can be made without departing from the scope of the invention.

It will also be understood that it is possible for one physical device to accommodate the functions of more than one device described hereinbefore.

Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.

Reference numerals appearing in the claims are by way of illustration only and shall have no limiting effect on the scope of the claims.

## Claims

1. A method of embedding at least one audiovisual packet (400) in an IP packet (406), comprising the steps of:
verifying (310) the type of the audiovisual packet;
associating (320) a priority to the audiovisual packet according to its type; and
embedding (330) the audiovisual packet in the IP packet if the IP packet is empty or if the audiovisual packet has the same priority as the at least one audiovisual packet already in the IP packet.

2. The method of claim 1, further comprising the steps of:
closing (340) the IP packet; and
setting (340) a priority (125) to the IP packet according to the priority of the at least one audiovisual packet therein.

3. The method of claim 1, wherein a predetermined maximum number of audiovisual packets may be embedded in the IP packet, so as to avoid fragmentation of the IP packet as it passes through an IP network.

4. The method of claim 1, wherein the priority of audiovisual packets related to audio and the priority of audiovisual packets related to video are higher the priority of audiovisual packets related to signalling.

5. The method of claim 4, wherein audiovisual packets related to audio and audiovisual packets related to video have different priorities.

6. The method of claim 1, wherein the audiovisual packets are MPEG-2 Transport Stream (TS) packets.

7. The method of claim 6, wherein TS packets related to audio and TS packets related to Intra-coded (I) frames have higher priority than TS packets related to Predictive-coded (P) frames and TS packets related to Bi-directional predictive-coded (B) frames.

8. The method of claim 6, wherein the embedding step (330) further comprises embedding a TS packet relating to video only if it relates to the same frame as the at least one TS packet relating to video already in the IP packet.

9. The method of claim 6, wherein TS packets related to Program Association Tables (PAT) and TS packets related to Program Map Tables (PMT) have a higher priority than TS packets relating to other Program Specific Information (PSI) tables at least part of the time.

10. The method according to claim 1, wherein audiovisual packets relating to error correction have a lower priority than other audiovisual packets.

11. The method according to claim 10, wherein there are at least two different types of error correction schemes, each related to a different type of audiovisual packets.

12. A video server (210) for embedding at least one audiovisual packet (400) in an IP packet (406), the video server comprising a processor (211) adapted to:
verify (310) the type of the audiovisual packet;
associate (320) a priority to the audiovisual packet according to its type; and
embed (330) the audiovisual packet in the IP packet if the IP packet is empty or if the audiovisual packet has the same priority as the at least one audiovisual packet already in the IP packet.

13. The video server (210) of claim 12, wherein the processor further is adapted to:
close (340) the IP packet; and
set (340) a priority (125) to the IP packet according to the priority of the audiovisual packets therein.

14. The video server (210) of claim 12, wherein the processor further is adapted to embed at most a predetermined maximum number of audiovisual packets in the IP packet, so as to avoid fragmentation of the IP packet as it passes through an IP network.

15. The video server (210) of claim 12, wherein the processor further is adapted to associate a higher priority to audiovisual packets related to audio and to audiovisual packets related to video higher than to audiovisual packets related to signalling.

16. The video server (210) of claim 15, wherein the processor further is adapted to associate different priorities to audiovisual packets related to audio and to audiovisual packets related to video.

17. The video server (210) of claim 12, wherein the audiovisual packets are MPEG-2 Transport Stream (TS) packets.

18. The video server (210) of claim 17, wherein the processor further is adapted to associate a higher priority to TS packets related to audio and TS packets related to Intra-coded (I) frames than to TS packets related to Predictive-coded (P) frames and TS packets related to Bi-directional predictive-coded (B) frames.

19. The video server (210) of claim 17, wherein the processor further is adapted to embed a TS packet relating to video only if it relates to the same frame as the at least one TS packet relating to video already in the IP packet.

20. The video server (210) of claim 17, wherein the processor further is adapted to at least part of the time associate a higher priority to TS packets related to Program Association Tables (PAT) and TS packets related to Program Map Tables (PMT) than to TS packets relating to other Program Specific Information (PSI) tables.

21. The video server (210) according to claim 12, wherein the processor further is adapted to associate a lower priority to audiovisual packets relating to error correction than to other audiovisual packets.

22. The video server (210) according to claim 12, further comprising a reception unit (213) adapted to receive audiovisual packets and to forward them to the processor (211).

23. The video server (210) according to claim 12, further comprising an output unit (214) adapted to receive IP packets and to send them onto an IP network (230).

24. The video server (210) according to claim 12, further comprising a memory (212) adapted to store audiovisual packets and IP packets while they are embedded
